# EUROPÄISCHE PATENTANMELDUNG

(11) **EP 3 561 613 A1**
(43) Veröffentlichungstag der Anmeldung: **30.10.2019**
(21) Anmeldenummer: 18169849.9
(22) Anmeldetag: 27.04.2018
(51) Int. Cl.: G04G 21/04, G04G 21/00

(54) **UHR MIT SENSOR**

(71) Anmelder: Habermann, Gerd, 8906 Bonstetten (CH)
(72) Erfinder: Habermann, Gerd, 8906 Bonstetten (CH)
(74) Vertreter: Keller & Partner Patentanwälte AG

(57) **Zusammenfassung**

Eine Uhr (1), insbesondere eine Armbanduhr, umfasst eine Anzeigeeinheit (30) zum Anzeigen einer Information, wobei sie weiter mindestens einen Sensor (23) zur Erfassung einer Bewegung eines Gegenstandes, insbesondere einer Bewegung eines Gegenstandes im Raum umfasst. In einem Verfahren zum Ermitteln einer Bewegung eines Gegenstandes mit einer Uhr (1) wird mit dem Sensor (23) zu einem ersten Zeitpunkt eine erste Position des Gegenstandes und zu einem zweiten Zeitpunkt eine zweite Position des Gegenstandes ermittelt, wobei anhand der ersten Position und der zweiten Position die Bewegung des Gegenstands zwischen dem ersten Zeitpunkt und dem zweiten Zeitpunkt in Form eines ersten Vektors ermittelt wird. In einem Verfahren zur Ansteuerung einer Uhr (1) wird eine Bewegung eines Gegenstand ermittelt und aufgrund der ermittelten Bewegung eine Anzeige auf der Anzeigeeinheit (30) gesteuert.

## Beschreibung

### Technisches Gebiet

Die Erfindung betrifft eine Uhr, insbesondere eine Armbanduhr, umfassend eine Anzeigeeinheit zum Anzeigen einer Information. Weiter betrifft die Erfindung ein Verfahren zum Ermitteln einer Bewegung eines Gegenstandes mit der Uhr, sowie ein Verfahren zur Ansteuerung der Uhr.

### Stand der Technik

Uhren, insbesondere Armbanduhren sind in einer Vielzahl an Varianten bekannt. Insbesondere sind Uhren mit elektronischen Funktionen, wie zum Beispiel einer elektronischen Anzeigeeinheit zum Anzeigen von Informationen bekannt. Solche Anzeigen können zum Beispiel Meldungen umfassen, welche die Uhr von einem Smartphone empfängt, insbesondere zum Beispiel ein Eingang Push-Benachrichtigungen, einer SMS, eines Telefonats etc. Weiter können die Anzeigen auch Bilder darstellen oder es können Daten abgerufen werden.

Nachteilig bei solchen Uhren ist die in der Regel umständliche Bedienung dieser elektronischen Funktionen. Typischerweise umfassen solche Uhren einen Touchscreen und/oder Knöpfe zur Bedienung dieser elektronischen Funktionen. Knöpfe, welche zum Beispiel seitlich oder am Randbereich am Uhrengehäuse angeordnet sind, sind üblicherweise klein und mühsam in der Bedienung. Der Touchscreen hat auch den Nachteil, dass dieser relativ klein ist, so dass zur Bedienung viel Fingerspitzengefühl und eine gewisse Geschicklichkeit notwendig ist. Weiter haben die Touchscreen den Nachteil, dass diese durch die ständigen Berührungen schnell verschmutzten, so dass einerseits die Bedienung des Touchscreen beeinträchtigt werden kann und anderseits die Informationen auf dem Touchscreen schwerer erkennbar sind.

### Darstellung der Erfindung

Aufgabe der Erfindung ist es, eine dem eingangs genannten technischen Gebiet zugehörende Uhr, insbesondere Armbanduhr, mit einer Anzeigeeinheit zu schaffen, welche einfach zu bedienen ist.

Die Lösung der Aufgabe ist durch die Merkmale des Anspruchs 1 definiert. Gemäss der Erfindung umfasst die Uhr mindestens einen Sensor zur Erfassung einer Bewegung eines Gegenstandes, insbesondere einer Bewegung im Raum.

Dadurch, dass die Uhr einen Sensor zur Erfassung einer Bewegung eines Gegenstandes umfasst, kann die Uhr berührungsfrei gesteuert werden. Damit können, im Vergleich zu entsprechenden Touchscreen, im Abstand zur Uhr grössere Bewegungen erfasst werden. Auf einer Touchscreen einer Armbanduhr ist es bekanntermassen schwierig, eine Aktion auszuführen, da während dem Berühren des Displays dasselbe hinter dem Finger kaum mehr zu sehen ist. Auch sind komplexere Bewegungen auf dem typischerweise kleinen Armbanduhr-Display kaum auszuführen respektive korrekt durch ein Programm zu erfassen. Zum Beispiel kann ein Verfahren des Fingers durch den Sensor erfasst werden und als Befehl für eine Aktion interpretiert werden. Prinzipiell können solche Bewegungen ausschliesslich in einer Dimension erfasst werden. Damit können mit der Bewegungsrichtung und gegebenenfalls mit der Bewegungslänge unterschiedliche Befehle angesteuert werden. Vorzugsweise wird mit dem Sensor jedoch eine Bewegung in der Ebene, besonders bevorzugt im Raum erfasst. Insbesondere bei einer Erfassung einer ebenen Bewegung, können auch komplexe Bewegungsmuster erkannt werden, zum Beispiel eine Acht, eine Schleife etc. Jedem Bewegungsmuster kann damit in der Uhr ein separater Befehl zugeordnet werden. Bei einer Erfassung von Bewegungen im Raum kann die Komplexität der Bewegungen weiter erhöht werden. Weiter können auch Bewegungen im Raum, insbesondere Bewegungen hin, respektive weg von der Uhr sowie in parallelen Ebenen zur Uhr mit berücksichtigt werden und einem Befehl zugeordnet werden. Dem Fachmann sind beliebige Muster bekannt, welche so mit dem Sensor erfasst und einem Befehl zugeordnet werden können.

Dem Fachmann sind viele Sensoren bekannt, mit welchen eine Bewegung erfasst werden können. Grundsätzlich sind dazu zwei Positionen zu ermitteln, an welchen sich derselbe Gegenstand zu unterschiedlichen Zeiten aufhält. Aufgrund mehrerer solcher Punkte kann ein Bewegungspolygon erstellt werden. Der Sensor kann derart ausgebildet sein, dass direkt eine Bewegung erfasst werden kann. Anderseits können mehrere Sensoren vorgesehen sein, mit welchen eine Triangulation durchgeführt wird. Dem Fachmann sind auch weiter Techniken zur Ermittlung einer Bewegung eines Gegenstands bekannt.

Bevorzugt umfasst die Uhr ein Uhrwerk. Alternativ kann die Uhr auch lediglich einen Empfänger für ein Zeitsignal umfassen und damit zum Beispiel als Funkuhr ausgebildet sein.

Die Anzeigeeinheit umfasst vorzugsweise einen digitalen Bildschirm, insbesondere einen LED, LCD, OLED oder einen anderweitigen Bildschirm, auf welchem Daten angezeigt werden können. Alternativ kann die Anzeigeeinheit auch lediglich ein Anzeigefeld

Die Uhr umfasst vorzugsweise eine Schnittstelle zu einem weiteren elektronischen Gerät, wie zum Beispiel zu einem Smartphone oder einem Tablet. Weiter umfasst die Uhr bevorzugt eine Sende/Empfänger-Einheit womit Daten sowohl empfangen als auch gesendet werden können. Die Daten können weiter zum Beispiel ein Datum, eine Uhrzeit einer anderen Zeitzone, einen Informations- beziehungsweise einen Warnhinweis bezüglich des Zustandes der Uhr oder dergleichen umfassen. Weiter können auch Informationen oder graphische Elemente dargestellt werden, welche über Bluetooth, Funk etc. an die Uhr gesandt wurden. Entsprechende Daten können über ein Smartphone, einen Computer, ein Tablet etc. an die Uhr gesandt werden. Die Daten können dabei in beliebiger Form versandt werden. Weiter kann zum Beispiel der Eingang einer SMS, E-Mail, MMS und dergleichen durch das Display signalisiert werden. Weiter können reduzierte Inhalte solcher Mitteilungen dargestellt werden, zum Beispiel ein Betreff einer E-Mail und dergleichen. Als graphische Elemente können zum Beispiel Symbole für Telefon, SMS, E-Mail, MMS, aber auch andere Icons, Emojis, Fotos, Pläne, Pfeile (z.B. für Navigationsbefehle) etc. vorgesehen sein. Dem Fachmann sind dazu aus dem Stand der Technik beliebige Informationen und Symbole oder Grafiken bekannt, welche auf einem Display einer Uhr dargestellt werden können.

Mittels des mindestens einen Sensors kann nun mit einer vorgegebenen Bewegung, welche zum Beispiel mit einem Zeigefinger ausgeführt wird, eine SMS geöffnet, gescrollt, geschlossen oder der Eingang der SMS bestätigt werden. Weiter können mit einer einem Passwort entsprechenden Bewegung zum Beispiel Funktionen der Uhr entsperrt werden. Dazu kann der Zeigefinger zum Beispiel in einer vorgegebenen Richtung (nach oben, diagonal, links, rechts, hin zur Uhr, weg von der Uhr etc.) bewegt werden. Ebenso können Bewegungen vordefiniert sein, mit welcher ein Programm, zum Beispiel eine Navigationshilfe gestartet und gesteuert werden kann. Dem Fachmann sind beliebig viele Anwendungen dazu bekannt.

In Varianten kann auf die Schnittstellen und/oder auf die Sende/Empfänger-Einheit auch verzichtet werden. Die Anzeigeeinheit kann alternativ oder zusätzlich in diesem Fall zum Beispiel zur Überwachung von Körperfunktionen, wie zum Beispiel Puls, Temperatur, Blutzucker etc. eingesetzt werden, wobei die Sensoren durch die Uhr selbst umfasst sind.

Vorzugsweise umfasst die Uhr ein Zifferblatt und mindestens einen Zeiger zum Anzeigen einer Uhrzeit auf dem Zifferblatt. Vorzugsweise umfasst die Uhr ein mechanisches Uhrwerk, welches zum Beispiel als Automatik-Uhrwerk oder Aufzugsuhrwerk ausgebildet sein kann. Das Uhrwerk kann einen Stromgenerator zum Betreiben der elektronischen Funktionen respektive der Anzeigeeinheit und/oder des Sensors umfassen. Das Uhrwerk kann auch Solarzellen oder andere dem Fachmann bekannte Vorrichtungen zur Erzeugung von elektrischer Energie umfassen. Alternativ kann auf das mechanische Uhrwerk auch verzichtet werden. In diesem Fall kann zum Beispiel ein Quarzuhrwerk oder dergleichen vorgesehen sein. Die Uhr kann alternativ oder zusätzlich eine oder mehrere Batterien zum Betreiben der Anzeigeeinheit und des Sensors umfassen.

Der Uhrzeiger ist zur Anzeige einer Uhrzeit ausgebildet und in dieser Form dem Fachmann hinreichend bekannt. Der Uhrzeiger kann dem Fachmann bekannte Formen aufweisen. Es können mehr als ein Uhrzeiger vorgesehen sein, so dass zum Beispiel Stunden und Minuten oder zusätzlich Sekunden, Datum, Ladezustand eines Automatiklaufwerks etc. angezeigt werden können. Die mehreren Uhrzeiger müssen nicht zwingend koaxial sein, sondern können über separate, vorzugsweise parallele Achsen gehalten sein, so dass zum Beispiel ein Ladezustand über eine zur Uhrzeit separate Achse angezeigt wird. Es ist auch denkbar, dass mit einem mechanischen Uhrzeiger ein SMS-Eingang oder dergleichen angezeigt wird.

Mit dem Sensor kann auch die Bewegung der Uhrzeiger überwacht werden. Damit kann zum Beispiel ad hoc die Ganggenauigkeit einer mechanischen Uhr geprüft werden.

Auf das Zifferblatt und auf den Uhrzeiger kann auch verzichtet werden. In diesem Fall kann die Uhr als elektronische Uhr ausgebildet sein, welche ausschliesslich über ein Display verfügt.

Vorzugsweise ist der Sensor auf dem Zifferblatt angeordnet. Diese Anordnung hat den Vorteil, dass der Sensor als gestalterisches Element eingesetzt werden kann. Weiter kann damit der Sensor durch ein Deckglas der Uhr vor Beschädigungen geschützt werden. Das Deckglas der Uhr kann insbesondere derart ausgebildet sein, dass es für den Sensor als Linse dient, um einen besonders grossen Winkelbereich (Weitwinkel) abdecken zu können. Damit können mit dem Sensor Bewegungen erfasst werden, welche ausserhalb der Uhr, im Bereich der Deckglasebene liegen.

In Varianten kann der Sensor auch auf dem Uhrengehäuse oder auf dem Armband angeordnet sein.

Vorzugsweise umfasst eine Applike auf dem Zifferblatt den Sensor. Damit kann ein Sensor in besonders ästhetischer Weise auf der Uhr angeordnet werden. Weiter hat der Einsatz des Sensors als Applike oder als Teil einer Applike den Vorteil, dass der Sensor vom Zifferblatt abstehen kann, ohne das Erscheinungsbild des Zifferblatts zu beeinträchtigen. Durch das Abstehen vom Zifferblatt kann ein Sensor eingesetzt werden, welcher zum Beispiel eine Wölbung aufweist, so dass ein besonders grosser Winkelbereich abgedeckt werden kann.

In Varianten kann auf die Integration des Sensors in einer Applike auch verzichtet werden. In diesem Fall kann der Sensor zum Beispiel auf der, die Uhrzeiger tragenden Welle, oder auf den Uhrzeiger angeordnet sein. Weiter kann der Sensor auch einfach in das Zifferblatt eingelassen sein.

Vorzugsweise ist die Applike als Index ausgebildet, insbesondere als Index für eine oder mehrere der Uhrzeiten 12 Uhr, 3 Uhr, 6 Uhr oder 9 Uhr. Besonders bevorzugt sind die Indices prismatisch, insbesondere quaderförmig oder kreiszylindrisch ausgebildet, so dass diese direkt durch einen Sensor ausgebildet sein können.

In Varianten kann der Sensor auch lediglich als Teil einer Applike, insbesondere als ein Punkt auf einer Ziffer, einem Buchstaben oder einem Markenzeichen vorgesehen sein.

Vorzugsweise ist der Sensor als Ultraschallsensor ausgebildet. Der Ultraschallsensor hat den Vorteil, dass er besonders robust in der Anwendung ist Sensor. Der Ultraschallsensor funktioniert unabhängig von der Sichtweite, so dass auch bei Verschmutzungen auf dem Deckglas die Funktion kaum beeinträchtigt wird.

In Varianten können auch andere Sensoren vorgesehen sein, insbesondere kann der Sensor als Fotosensor ausgebildet sein. Die Ausbildung als Fotosensor hat den Vorteil, dass damit auch Aufnahmen gemacht werden können, so dass eine Verwendung für unterschiedliche Zwecke möglich ist. Der Fotosensor kann aber auch als Infrarotsensor vorgesehen sein, so dass der Sensor zum Beispiel nur durch einen warmen Gegenstand aktiviert wird, insbesondere durch einen Finger oder eine Hand. Damit können Fehlfunktionen vermieden werden, wenn zum Beispiel ein Ärmel über die Uhr streift oder die Uhr nahe an einem Gegenstand vorbei bewegt wird.

In Varianten können auch andere dem Fachmann bekannte Sensoren vorgesehen sein. Weiter kann auch eine Kombination der Sensoren vorgesehen sein. Damit können die Vorteile mehrerer Sensoren kombiniert werden.

Vorzugsweise umfass die Uhr genau einen Fotosensor. Durch die mehreren Pixel eines Fotosensors können unterschiedliche Raumpunkte erfasst werden, womit eine Triangulation bereits mit einem einzigen Fotosensor möglich ist. Der Fotosensor kann damit eine Bewegung erfassen und kann somit als Bewegungssensor dienen. Damit kann die Uhr besonders kostengünstig und einfach ausgebildet sein.

Alternativ können mehr als ein Fotosensor vorgesehen sein, welche insbesondere zueinander beabstandet angeordnet sind. Zum Beispiel können drei Fotosensoren (dies gilt auch für Ultraschallsensoren) im Bereich der Indices für 3 Uhr, 6 Uhr und 12 Uhr vorgesehen sein. Die drei Fotosensoren können grundsätzlich beliebig angeordnet sein.

In einem Verfahren zum Ermitteln einer Bewegung eines Gegenstandes mit einer Uhr, welche einen Sensor umfasst wird mit dem Sensor zu einem ersten Zeitpunkt eine erste Position des Gegenstandes, insbesondere eine räumliche erste Position ermittelt und zu einem zweiten Zeitpunkt eine zweite Position des Gegenstandes, insbesondere eine räumliche zweite Position ermittelt. Anhand der ersten Position und der zweiten Position wird die Bewegung des Gegenstands, insbesondere die räumliche Bewegung des Gegenstands zwischen dem ersten Zeitpunkt und dem zweiten Zeitpunkt in Form eines ersten Vektors ermittelt.

Vorzugsweise werden zwei oder mehr Vektoren zu einem Bewegungspolygon, insbesondere einem räumlichen Bewegungspolygon zusammengesetzt.

In Varianten können im Verfahren auch lediglich einzelne Vektoren analysiert werden.

In einem Verfahren zur Ansteuerung einer Uhr mit einem Sensor wird eine Bewegung eines Gegenstand ermittelt und zu einem oder mehreren Vektoren ausgewertet. Der oder die Vektoren respektive der Bewegungspolygon werden vorzugsweise mit Daten einer Datenbank verglichen und bei einer Übereinstimmung einem bestimmten Befehl zugeordnet. Aufgrund der ermittelten Bewegung eine Anzeige auf der Anzeigeeinheit gesteuert. Die Techniken der Mustererkennung, welche eine Zuordnung der ermittelten Daten zu einem Hinterlegten Muster ermöglicht, sind dem Fachmann hinreichend bekannt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnung zeigt:
- Fig. 1: eine Explosionsdarstellung einer ersten Ausführungsform einer erfindungsgemässen Uhr.
- Fig. 2: eine Explosionsdarstellung einer zweiten Ausführungsform einer erfindungsgemässen Uhr.
- Fig. 3: eine Explosionsdarstellung einer dritten Ausführungsform einer erfindungsgemässen Uhr.

Grundsätzlich sind in den Figuren gleiche Teile mit gleichen Bezugszeichen versehen.

### Wege zur Ausführung der Erfindung

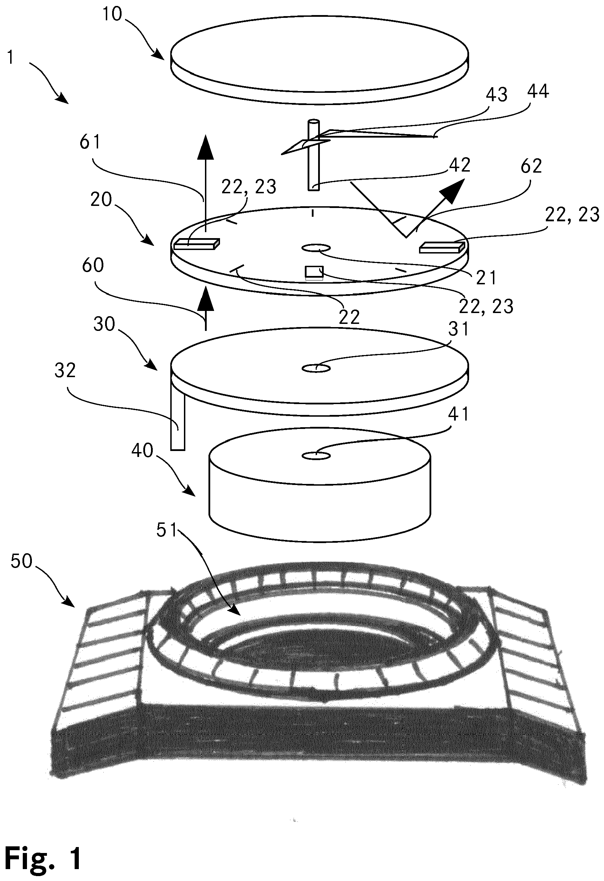

Die Figur 1 zeigt eine Explosionsdarstellung einer ersten Ausführungsform einer erfindungsgemässen Uhr 1. Die Uhr 1 ist vorliegend als Armbanduhr ausgebildet. Die Uhr kann aber auch als Taschenuhr, Tischuhr, Wanduhr, Bahnhofsuhr, Turmuhr etc. ausgebildet sein.

Die Uhr 1 umfasst ein Uhrengehäuse 50 mit einer im Wesentlichen kreiszylindrischen Aufnahme 51. In der Aufnahme 51 ist ein Uhrwerk 40 mit einer Aufnahme 41 für den Zeigerstab 42 aufgenommen, welches vorliegend vorzugsweise als mechanisches Uhrwerk ausgebildet ist, das Uhrwerk 40 kann aber auch elektrisch ausgebildet sein. Nicht dargestellt ist weiter eine Batterie, welche ebenfalls in der Aufnahme 51 aufgenommen ist.

Oberhalb des Uhrwerks 40 folgt ein Display 30 mit Anschlüssen 32 für die Energieversorgung mit der Batterie. Die notwendige Elektronik für die Datenaufbereitung, das allfällige Senden und Empfangen von Daten, welche auf dem Display angezeigt werden können, befindet sich vorliegend nicht näher dargestellt ebenfalls innerhalb des Uhrengehäuses 50. Das Display 30 ist vorliegend als LED-Display ausgebildet, kann aber auch als LCD-Display oder anderweitig ausgebildet sein. Mittig umfasst das Display 30 eine Öffnung 31, durch welche der Zeigerstab 42 hindurch geführt werden kann. Das Display 30 ist vorliegend als Kreisscheibe ausgebildet, welche im Wesentlichen die Fläche des Zifferblatts 20 einnimmt. In Varianten kann das Display 30 aber auch eine andere Form einnehmen, insbesondere zum Beispiel rechteckig sein. Das Display 30 muss somit nicht zwingend die gesamte Fläche des Zifferblatts 20 einnehmen. Insbesondere kann das Zifferblatt 20 einen Ausschnitt aufweisen, in welchem ein Display 30 angeordnet ist.

Oberhalb des Displays 30 ist die Scheibe, vorliegend ausgebildet als Zifferblatt 20, angeordnet. Dem Fachmann ist klar, dass auf die Scheibe verzichtet werden kann. Stattdessen kann das Display 30 selbst als Zifferblatt ausgebildet sein. Das Zifferblatt 20 umfasst eine Öffnung 21, durch welche der Zeigerstab 42 hindurch geführt werden kann. Weiter sind auf dem Zifferblatt 20 Indices 22 zur Anzeige der Uhrzeit angeordnet. Diese sind vorliegend als Appliken 22 ausgebildet. Das Zifferblatt umfasst vorliegend 8 solche Indices, wobei drei dieser Indices einen Sensor 23 umfassen. Die Sensoren 23 sind vorliegend als Ultraschallsensoren ausgebildet. Durch die beabstandete Anordnung der drei Ultraschallsensoren 23 kann eine Triangulation erreicht werden, womit ein Gegenstand räumliche lokalisiert werden kann. Insbesondere kann damit die Bewegung eines Fingers oder einer Hand als Bewegungspolygon erfasst werden. Die Sensoren 23 sind über nicht näher dargestellte Leitungen mit der Elektronik der Uhr 1 verbunden, so dass die ermittelten Daten ausgewertet und gegebenenfalls einem Befehl zugeordnet werden können. Dazu umfasst die Elektronik einen Prozessor und einen Datenspeicher. Der Prozessor und/oder der Datenspeicher können jedoch auch dezentral, als Server oder dergleichen vorliegen - in diesem Fall ist eine IO-Schnittstelle vorgesehen.

Das Zifferblatt 20 besteht vorliegend aus Glas und ist mit Silberoxid beschichtet, so dass Lichtstrahlen 60 ausgehend vom Display 30 durch das Zifferblatt 20 hindurch, als Lichtstrahlen 61 aus der Oberseite des Zifferblatts 20 austreten, während aber Lichtstrahlen 62, welche von oben auf das Zifferblatt 20 auftreffen, von dem Zifferblatt 20 reflektiert werden. Dem Fachmann sind andere Materialien und Beschichtungen bekannt, womit derselbe Effekt erreicht werden kann.

Die Uhr 1 umfasst weiter den Zeigerstab 42, welcher vorliegend einen Stundenzeiger 43 und einen Minutenzeiger 44 umfasst. Zusätzlich können weitere Zeiger, insbesondere Sekundenzeiger oder weitere Zeiger für diverse Komplikationen vorgesehen sein (Datum, Chronometer etc.).

Schliesslich umfasst die Uhr 1 ein Deckglas 10, welches vorliegend aus Glas ausgebildet ist, aber alternativ auch aus Saphirglas, Kunststoff etc. ausgebildet sein kann.

Dem Fachmann ist klar, dass die drei Sensoren 23 auch anderweitig auf dem Zifferblatt 20 angeordnet sein können.

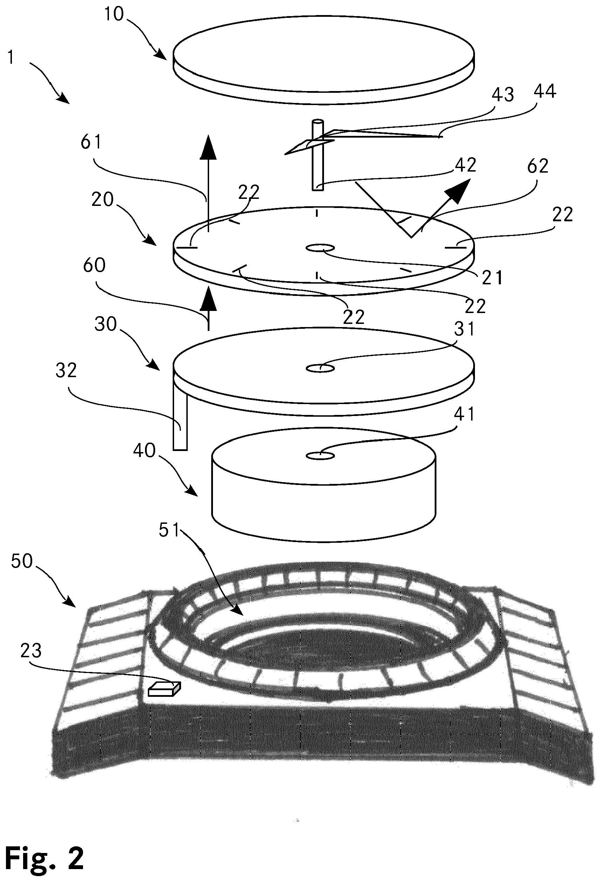

Die Figur 2 zeigt eine zweite Ausführungsform einer Uhr 1. Diese stimmt im Wesentlichen mit derjenigen der ersten Ausführungsform überein. Im Unterschied zur ersten Ausführungsform umfasst die Uhr genau einen Sensor 23, welcher auf dem Uhrengehäuse 50 angeordnet ist. Der Sensor 23 ist vorliegend als Fotosensor ausgebildet.

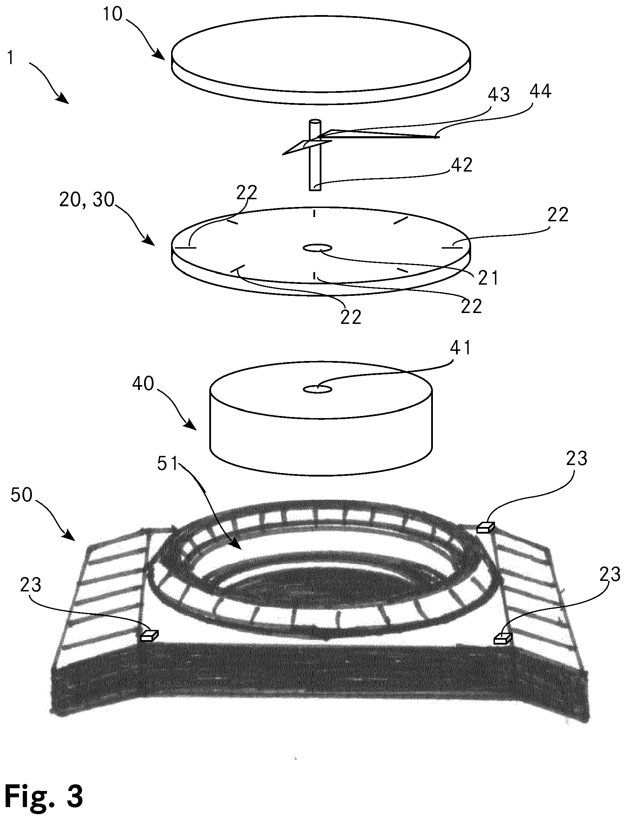

Die Figur 3 zeigt eine dritte Ausführungsform einer Uhr 1. Diese stimmt im Wesentlichen mit derjenigen der ersten Ausführungsform überein. Im Unterschied zur ersten Ausführungsform umfasst die Uhr drei Sensoren 23, welcher auf dem Uhrengehäuse 50 angeordnet ist. Die drei Sensoren 23 sind vorliegend als Fotosensoren ausgebildet.

Dem Fachmann ist klar, dass die Uhr auch unterschiedliche Sensoren aufweisen kann, insbesondere zum Beispiel eine Auswahl aus Fotosensoren, Ultraschallsensoren, IR-Sensoren etc. Die Sensoren können auch sowohl auf dem Gehäuse 50 als auch auf dem Zifferblatt vorgesehen sein. Ebenso können die Sensoren auch an anderen Uhrbestandteilen angeordnet sein, insbesondere zum Beispiel am Armband oder im Deckglas 10 eingelassen etc.

Zusammenfassend ist festzustellen, dass die erfindungsgemässe Uhr besonders ergonomisch bedient werden kann, ohne das Display zu verschmutzen.

## Patentansprüche

1. Uhr (1), insbesondere eine Armbanduhr, umfassend eine Anzeigeeinheit (30) zum Anzeigen einer Information, **dadurch gekennzeichnet, dass** sie weiter mindestens einen Sensor (23) zur Erfassung einer Bewegung eines Gegenstandes, insbesondere einer Bewegung eines Gegenstandes im Raum umfasst.

2. Uhr (1) nach Anspruch 1, **dadurch gekennzeichnet, dass** sie ein Zifferblatt (20) und mindestens einen Zeiger (42) zum Anzeigen einer Uhrzeit auf dem Zifferblatt (20) umfasst.

3. Uhr (1) nach Anspruch 1 oder 2, **dadurch gekennzeichnet, dass** der Sensor (23) auf dem Zifferblatt (20) angeordnet ist.

4. Uhr (1) nach Anspruch 3, **dadurch gekennzeichnet, dass** eine Applike (22) auf dem Zifferblatt (20) den Sensor (23) umfasst.

5. Uhr (1) nach Anspruch 4, **dadurch gekennzeichnet, dass** die Applike (22) als Index ausgebildet ist, insbesondere als Index für eine oder mehrere der Uhrzeiten 12 Uhr, 3 Uhr, 6 Uhr oder 9 Uhr.

6. Uhr (1) nach einem der Ansprüche 1 bis 5, **dadurch gekennzeichnet, dass** der Sensor (23) als Ultraschallsensor ausgebildet ist.

7. Uhr (1) nach einem der Ansprüche 1 bis 5, **dadurch gekennzeichnet, dass** der Sensor (23) als Fotosensor ausgebildet ist.

8. Uhr (1) nach Anspruch 7, **dadurch gekennzeichnet, dass** sie genau einen Fotosensor umfasst.

9. Verfahren zum Ermitteln einer Bewegung eines Gegenstandes mit einer Uhr (1) nach einem der Ansprüche 1 bis 8, **dadurch gekennzeichnet, dass** mit dem Sensor (23) zu einem ersten Zeitpunkt eine erste Position des Gegenstandes, insbesondere eine räumliche erste Position ermittelt wird und zu einem zweiten Zeitpunkt eine zweite Position des Gegenstandes, insbesondere eine räumliche zweite Position ermittelt wird, wobei anhand der ersten Position und der zweiten Position die Bewegung des Gegenstands, insbesondere die räumliche Bewegung des Gegenstands zwischen dem ersten Zeitpunkt und dem zweiten Zeitpunkt in Form eines ersten Vektors ermittelt wird.

10. Verfahren nach Anspruch 9, **dadurch gekennzeichnet, dass** zwei oder mehr Vektoren zu einem Bewegungspolygon, insbesondere einem räumlichen Bewegungspolygon zusammengesetzt werden.

11. Verfahren zur Ansteuerung einer Uhr (1), insbesondere einer Uhr (1) nach einem der Ansprüche 1 bis 8, wobei eine Bewegung eines Gegenstand nach einem Verfahren nach Anspruch 9 oder 10 ermittelt wird, **dadurch gekennzeichnet, dass** aufgrund der ermittelten Bewegung eine Anzeige auf der Anzeigeeinheit (30) gesteuert wird.
